# EUROPEAN PATENT SPECIFICATION

(11) **EP 2 538 469 B1**
(45) Date of publication and mention of the grant of the patent: **14.09.2016**
(21) Application number: 12159294.3
(22) Date of filing: 13.03.2012
(51) Int. Cl.: H01M 2/10, H01M 2/20, H01M 10/42, H01M 2/30

(54) **Battery pack**
Batteriepack
Bloc-batteries

(30) Priority: 23.09.2011 US 201113243457; 23.06.2011 US 201161500341 P
(43) Date of publication of application: 26.12.2012
(73) Proprietor: Samsung SDI Co., Ltd., Yongin-si, Gyeonggi-do (KR)
(72) Inventor: Han, Jung-Yeop, Gyeonggi-do (KR); Jang, Seung-Soo, Gyeonggi-do (KR)
(74) Representative: Hewett, Jonathan Michael Richard

(56) References cited:
- WO-A1-2010/071464
- US-A1- 2008 124 617

## Description

The present invention relates to a battery pack.

Secondary batteries refer to batteries capable of being charged or discharged unlike primary batteries that are not chargeable, and the secondary battery has been widely used not only for compact electronic devices such as mobile phones, personal digital assistants (PDAs), notebook computers, etc. but also for energy storage systems. During assembly or carrying of a secondary battery, a conductor may contact a terminal so that a positive electrode and a negative electrode are short-circuited, which may cause heating or firing of the secondary battery.

United States Patent Application No. US 2008/124617 discloses an example of a battery pack in which terminal tabs from each cell of a plurality of cells extend through holes in a bus bar, and tabs extending through a pair of holes are folded one over the other.

International Patent Application No. WO 2010/071464 discloses another example of clamping together poles of neighbouring battery cells, between a support and a cover.

According to an aspect of the present invention, there is provided a battery pack comprising a plurality of battery units arranged within a case, each battery unit including first and second electrode tabs, and an insulation plate mounted to the case, the insulation plate having a plurality of first ribs, and a plurality of first bus bars, each first bus bar arranged to cover a respective first rib of the insulation plate, wherein each first bus bar connects a first electrode tab of a first battery unit and a second electrode tab of a second battery unit, the first and second electrode tabs disposed on the first rib which is covered by the first bus bar.

In this manner, connection of the battery units is made possible in a manner in which short circuiting between electrode tabs can be prevented by the separation of the ribs, and the covering of the bus bars.

The battery pack may further comprise a terminal member, and a second bus bar arranged to connect the terminal member to a first electrode tab of one of the plurality of battery units.

The battery pack further comprises second ribs arranged perpendicular to the first ribs, wherein each of the first and second bus bars (161, 162) is fixed to a second rib.

The first ribs may be divided into two groups, and the second ribs may be arranged between the two groups of first ribs.

Each first bus bar has a main body portion arranged to cover the first rib, and a cell-balancing portion arranged to cover a portion of the second rib. The battery pack may comprise a printed circuit board coupled to the cell-balancing portion of the first bus bar, the printed circuit board arranged to provide battery unit voltage information to a battery management system.

The main body portion of each first bus bar may comprise at least one side wall arranged to at least partially surround at least one side of a respective first rib.
The first rib may comprise at least one side wall arranged to face the side wall of the first bus bar.
The second bus bar may comprise a main body portion covering a first rib, a current-balancing portion covering a portion of the second rib, and a high-current portion to which the terminal member is connected.

The battery pack may comprise a further terminal member, the terminal members separated by an insulation cover covering the insulation plate.
The insulation cover may be arranged to spatially separate the first bus bars .

The first electrode tab of the first battery unit and the second electrode tab of the second battery unit protrude through openings in the insulation plate either side of the first rib on which they are to be disposed, the first and second electrode tabs folded towards each other such that they are supported by the first rib.

Each first bus bar is attached to the first electrode tab of a first battery unit, the second electrode tab of a second battery unit, and the rib, using a fixing member.
The first electrode tab of the first battery unit has a different polarity from the second electrode tab of the second battery unit, such that the battery units are serially connected by a first bus bar.

The first electrode tab of the first battery unit has the same polarity as the second electrode tab of the second battery unit, such that the battery units are connected in parallel by a first bus bar.

Embodiments of the present invention will now be described by way of example only, with reference to the accompany drawings, in which:
FIG. 1 is a perspective view schematically illustrating a battery pack according to an embodiment of the present invention;
FIG. 2 is an exploded perspective view schematically illustrating constituent elements of the battery pack of FIG. 1, except for an insulation cover and a BMS;
FIG. 3 is a perspective view schematically illustrating an insulation plate;
FIG. 4A is a perspective view of a first bus bar;
FIG. 4B is a cross-sectional view taken along line IVb-IVb of FIG. 4A;
FIG. 5A is a perspective view of a second bus bar;
FIG. 5B is a cross-sectional view taken along line Vb-Vb of FIG. 5A;
FIG. 6A is a perspective view of a third bus bar;
FIG. 6B is a cross-sectional view taken along line VIb-VIb of FIG. 6A;
FIG. 7 is a perspective view schematically illustrating an insulation plate and a bus bar arranged in an upper portion of a case when battery units are accommodated in the case;
FIG. 8 is a cross-sectional view taken along line VIII-VIII of FIG. 7;
FIG. 9 is a perspective view schematically illustrating a state in which first and second lead tabs and a bus bar are coupled to each other on an insulation plate;
FIG. 10 is a cross-sectional view taken along line X-X of FIG. 9; and
FIG. 11 is a perspective view schematically illustrating a state in which a PCB is accommodated on a bus bar.

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. The scope of the present invention is defined by the following claims. In the meantime, the terms used in the present specification are used for explaining a specific exemplary embodiment, not limiting the present inventive concept. Thus, the expression of singularity in the present specification includes the expression of plurality unless clearly specified otherwise in context. Also, the terms such as "comprise" and/or "comprising" may be construed to denote a certain characteristic, number, step, operation, constituent element, or a combination thereof, but may not be construed to exclude the existence of or a possibility of addition of one or more other characteristics, numbers, steps, operations, constituent elements, or combinations thereof. In the present specification, the terms such as "first" and "second" are used herein merely to describe a variety of members, parts, areas, layers, and/or portions, but the constituent elements are not limited by the terms. The terms are used only for the purpose of distinguishing one constituent element from another constituent element. To help understanding of the invention, like reference numerals refer to like elements throughout.

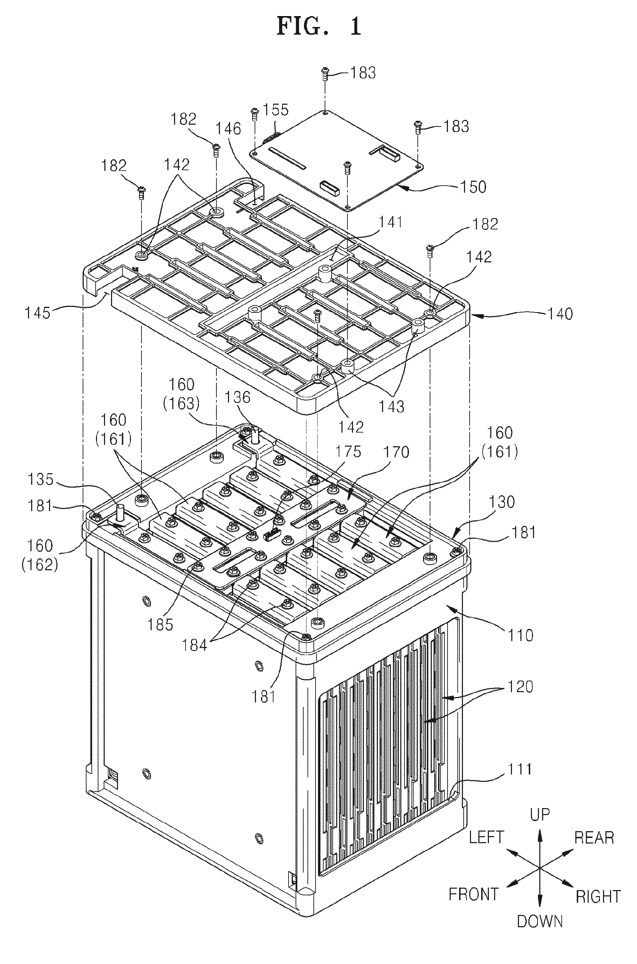

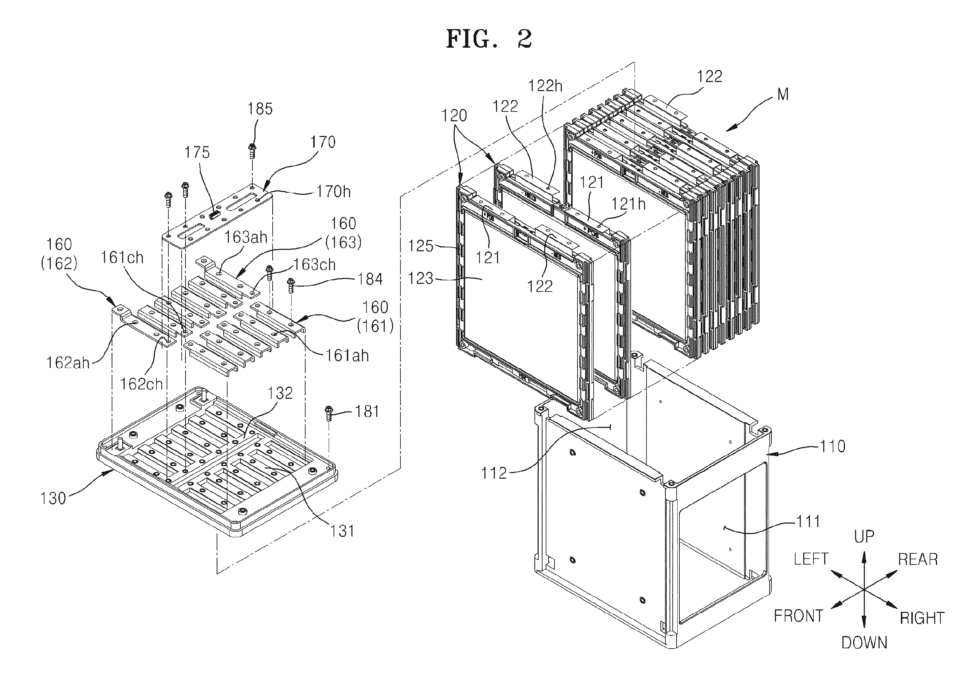

FIG. 1 is a perspective view schematically illustrating a battery pack according to an embodiment of the present invention. FIG. 2 is an exploded perspective view schematically illustrating constituent elements of the battery pack of FIG. 1, except for an insulation cover and a BMS.

Referring to FIGS. 1 and 2, a battery pack according to the present embodiment may include a case 110, a plurality of battery units 120, an insulation plate 130, a plurality of bus bars 160, a printed circuit board (PCB) 170, an insulation cover 140, and a battery management system (BMS) 150.

The case 110 may have a substantially hexahedral shape with an open upper surface for accommodating the battery units 120. The battery units 120 are accommodated in the case 110 to be parallel to one another. At least one lateral surface of the case 110 may be open to allow the battery units 120 to be exposed to external air. For example, both of lateral surfaces of the case 110 may be open. The air introduced through a first opening 111 provided at one open lateral surface of the case 110 may be exhausted outside through a second opening 112 provided at the other open lateral surface by passing through the battery units 120 accommodated in the case 110. The case 110 may be formed of an insulation material.

Each of the battery units 120 has a plate shape and includes a battery cell 123, first and second lead tabs 121 and 122 extending from one side of the battery cell 123, and a frame 125. The battery units 120 may be accommodated in the case 110 with first and second lead tabs 121 and 122 being exposed to the outside through the open upper surface of the case 110.

The battery cell 123 may include, for example, a lithium-ion battery. The battery cell 123 may include an electrode assembly (not shown) in which a positive plate, a negative plate, and a plurality of separators interposed therebetween are stacked. To provide the battery units 120 of high output and high capacity, a plurality of positive plates, negative plates, and separators may be stacked.

The frame 125 may accommodate the battery cell 123. The frame 125 may be formed of an insulation material to secure insulation from the first and second lead tabs 121 and 122. For example, the frame 125 may be formed of a polymer resin material such as polyphenylene sulphide (PPS).

The first and second lead tabs 121 and 122 form interconnection with the outside of the battery cell 123 and may extend from one side of the battery cell 123 to guide current from the battery cell 123 to the outside. The first and second lead tabs 121 and 122 may extend toward one side, for example, an upper side, of the frame 125. The first and second lead tabs 121 and 122 may include a metal material exhibiting a superior conductivity, for example, aluminium (Al), copper (Cu), nickel (Ni), etc.

The first and second lead tabs 121 and 122 may have the opposite polarities to each other. For example, the first and second lead tabs 121 and 122 may serve as a positive tab and a negative tab, respectively. To this end, the first and second lead tabs 121 and 122 may be electrically connected to a positive plate (not shown) and a negative plate (not shown) of an electrode assembly (not shown), respectively.

The first and second lead tabs 121 and 122 having the opposite polarities may be bent in the directions opposite to each other. The battery units 120 may be electrically connected using the first and second lead tabs 121 and 122. For example, the first lead tab 121 may be bent forward with respect to the direction along which the battery units 120 are arranged, whereas the second lead tab 122 may be bent backward. The bending of the first and second lead tabs 121 and 122 may be performed after the provision of a first rib 131 of the insulation plate 130.

When the battery units 120 are arranged to form a battery module M, to allow the battery units 120 to be serially connected, suitable for high-voltage applications, the battery units 120 may be arranged with the first and second lead tabs 121 and 122 of one battery unit respectively facing the opposite tabs of a neighbouring battery unit. That is, the neighbouring battery units 120 are arranged so that the left and right sides of the first and second lead tabs 121 and 122 having the opposite polarities may be reversed between each battery unit. A pair of the battery units 120 neighbouring each other may form electrical connection by connecting the first and second lead tabs 121 and 122 of the different battery units 120 bent to face each other. For the electrical connection between the battery units 120, coupling holes 121h and 122h may be formed in the first and second lead tabs 121 and 122.

Alternatively, the battery units 120 may be arranged in the battery module M such that they are connected in parallel, suitable for high-current applications. This is achieved by arranging the battery units such that first and second lead tabs 121 and 122 of one battery unit respectively face the same tabs of a neighbouring battery unit. That is, the neighbouring battery units 120 are arranged so that the left and right sides of the first and second lead tabs 121 and 122 having the opposite polarities have the same orientation.

The first and second lead tabs 121 and 122 bent to face each other may be folded on each other on the first rib 131 of the insulation plate 130 and connected by a first bus bar 161 provided on the first and second lead tabs 121 and 122. To this end, the first bus bar 161 may include a coupling hole 161ah for mechanically coupling the first and second lead tabs 121 and 122 using a fourth fixing member 184.

When the neighbouring battery units 120 are arranged so that the left and right sides of the first and second lead tabs 121 and 122 having the opposite polarities may be reversed for the serial connection of the battery units 120, any one of the first and second lead tabs 121 and 122 of the battery units 120 located at the outermost position may not be folded on another lead tab. For example, the first lead tab 121 of one of the battery units 120 that is located at the foremost position and the second lead tab 122 of one of the battery units 120 that is located at the rearmost position do not have lead tabs to face each other.

Some of the bus bars 160 connected to the first lead tab 121 or the second lead tab 122 bent forward or backward may form a high current flow of a battery pack. For example, a second bus bar 162 may be electrically connected to the first lead tab 121, whereas a third bus bar 163 may be electrically connected to the second lead tab 122. To this end, the second and third burs bars 162 and 163 may respectively include coupling holes 162ah and 163ah to be mechanically coupled to the first and second lead tabs 121 and 122 using the fourth fixing member 184. The bus bars 160 may include a metal material exhibiting superior conductivity, for example, aluminium (Al), copper (Cu), nickel (Ni), etc.

The bus bars 160 may acquire cell balancing information of the battery units 120. The bus bars 160 may be electrically connected to the PCB 170 to acquire information about voltage of each of the battery units 120. To this end, the bus bars 160 may include coupling holes 161ch, 162ch, and 163ch to be mechanically coupled to the PCB 170 using a fifth fixing member 185.

The insulation plate 130 may be arranged to cover the open upper portion of the case 110 and mechanically coupled to the case 110 using the first fixing member 181. The insulation plate 130 may support the first and second lead tabs 121 and 122 exposed to the upside of the case 110 and bent, and secure insulation between the bus bars 160.

To this end, the insulation plate 130 may include the first rib 131 to stably support the first and second lead tabs 121 and 122 and the bus bars 160, and a second rib 132 to support some of the bus bars 160 and the PCB 170 for acquiring balancing of each battery cell 123.

The first rib 131 may support the first and second lead tabs 121 and 122 bent forward or backward and the bus bars 160. The first rib 131 may form mechanical coupling with the fourth fixing member 184 that passes through the coupling holes 161ah, 162ah, and 163ah of the bus bars 160 and the coupling holes 121h and 122h of the first and second lead tabs 121 and 122.

The second rib 132 may form mechanical coupling with the fifth fixing member 185 that passes through a coupling hole 170h of the PCB 170 and a coupling hole 160ch formed in the bus bars 160.

The insulation plate 130 may include first and second terminal members 135 and 136. The first and second terminal members 135 and 136 may protrude in one direction to form interconnection with the outside of the battery pack. When the battery module M is formed as the battery units 120 are electrically connected to one another, the second bus bar 162 connected to the first lead tab 121 located at the foremost position and the third bus bar 163 connected to the second lead tab 122 located at the rearmost position have the opposite polarities. For example, the second bus bar 162 may be a positive pole of the battery module M, whereas the third bus bar 163 may be a negative pole of the battery module M. The second bus bar 162 is connected to the first terminal member 135 and the third bus bar 163 is connected to the second terminal member 136, thereby forming a high current flow of the battery pack.

The PCB 170 is accommodated on the insulation plate 130 and electrically connected to each of the bus bars 160 so as to sense a voltage of each of the battery units120. The PCB 170 may sense a voltage of the battery cell 123 of each of the battery units 120 to monitor whether a voltage difference among the battery cells 123 within an allowable range.

The voltage sensed by the PCB 170 may be transferred to the BMS 150 via a connector 175 formed on the PCB 170 and used for cell balancing. To this end, the BMS 150 may include a connector 155 that is connected to the connector 175 of the PCB 170 via a cable (not shown). The BMS 150 may compare the voltage of each battery cell 123 with a reference voltage and, when the voltage of each battery cell 123 is greater than the reference voltage, discharge is performed on the battery cell 123 having a voltage exceeding the reference voltage via a discharge path formed corresponding to each battery cell 123, thereby achieving cell balancing.

The insulation cover 140 may be arranged to cover the insulation plate 130. The insulation cover 140 may be arranged in a state in which the first and second lead tabs 121 and 122 and the bus bars 160 are stably coupled via the insulation plate 130 and the PCB 170 is accommodated thereon. A second fixing member 182 may be bolt coupled to an upper portion of the insulation plate 130 by passing through a coupling hole 142 formed in the insulation cover 140.

The insulation cover 140 may prevent short circuit by spatially separating the first and second terminal members 135 and 136 forming the high current flow. To this end, the insulation cover 140 may include recess portions 145 and 146 for accommodating the first and second lead tabs 121 and 122. Also, the insulation cover 140 may prevent a short circuit by spatially separating the bus bars 160 supported on the insulation plate 130.

A space for accommodating the BMS 150 is provided on an upper surface of the insulation cover 140. A third fixing member 183 may be coupled to a coupling hole 143 by passing through the BMS 150. For example, a bolt may be used as the third fixing member 183. The BMS 150 includes the connector 155 capable of communicating with the PCB 170. An opening 141 may be provided in the insulation cover 140 so that the cable connecting the connector 175 of the PCB 170 and the connector 155 of the BMS 150 may pass through the opening 141.

Although it is not illustrated in the drawing, an outer cover may be further provided on the insulation cover 140 to protect the BMS 150. The insulation cover 140 as an inner cover may be coupled to the outer cover through a fixing member such as a bolt.

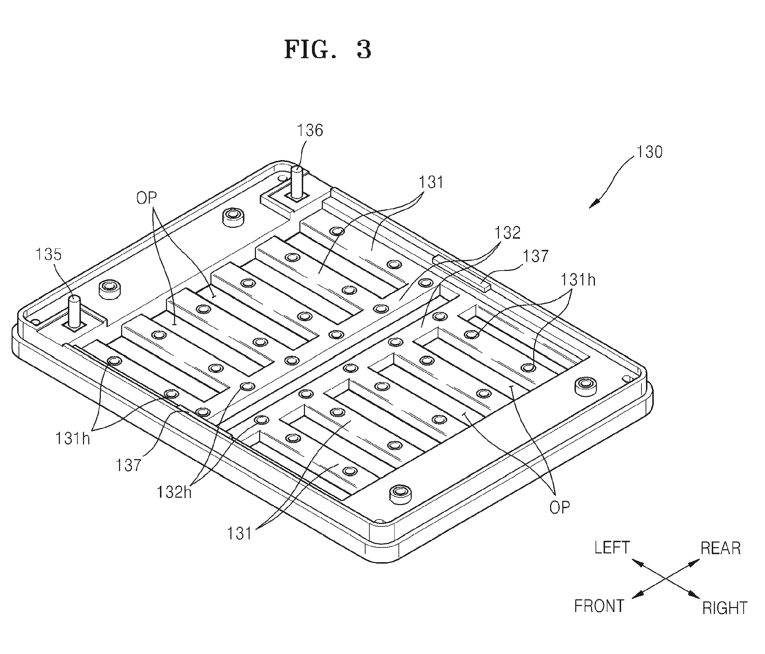

FIG. 3 is a perspective view schematically illustrating the insulation plate 130.

Referring to FIG. 3, the insulation plate 130 may include a plurality of the first ribs 131 extending in a left and right direction and a plurality of the second ribs 132 extending in the forward and backward direction. The second ribs 132 may extend to across the centre of the insulation plate 130. The first ribs 131 that extend perpendicularly to the second ribs 132 may be arranged parallel to one another at both sides of the second ribs 132.

As the first ribs 131 are separated from one another in the forward and backward direction, an opening OP through which the first and second lead tabs 121 and 122 pass may be formed. The width of the opening OP may be equal to or larger than the width of the first and second lead tabs 121 and 122 so that the first and second lead tabs 121 and 122 may pass through the opening OP.

The first ribs 131 support the first and second lead tabs 121 and 122. For example, the first and second lead tabs 121 and 122 respectively provided at the neighbouring battery units 120 may be exposed to the outside by passing through the openings OP formed at both sides of one of the first ribs 131. The first and second lead tabs 121 and 122 passing through the openings OP may be bent in directions facing each other and supported by the first ribs 131. The first ribs 131 may simultaneously support the first and second lead tabs 121 and 122 or any one of the first and second lead tabs 121 and 122.

Also, the first ribs 131 may support the bus bars 160 and have a plurality of coupling holes 131h for coupling to the fourth fixing member 184.

The second rib 132 may extend along a lengthwise direction of the PCB 170 to accommodate the PCB 170. For example, the fifth fixing member 185 may be coupled to the second rib 132 by passing through the PCB 170. To this end, a plurality of coupling holes 132h may be provided in the second rib 132. A spacer 137 to guide an accommodation position of the PCB 170 and prevent a movement of the PCB 170 may be provided at both ends of the second rib 132.

Although in the present embodiment the first ribs 131 and the second rib 132 are formed to the same height, the present invention is not limited thereto. For example, the second rib 132 may extend as high as the height of the upper surface of the spacer 137 to be higher than the first ribs 131.

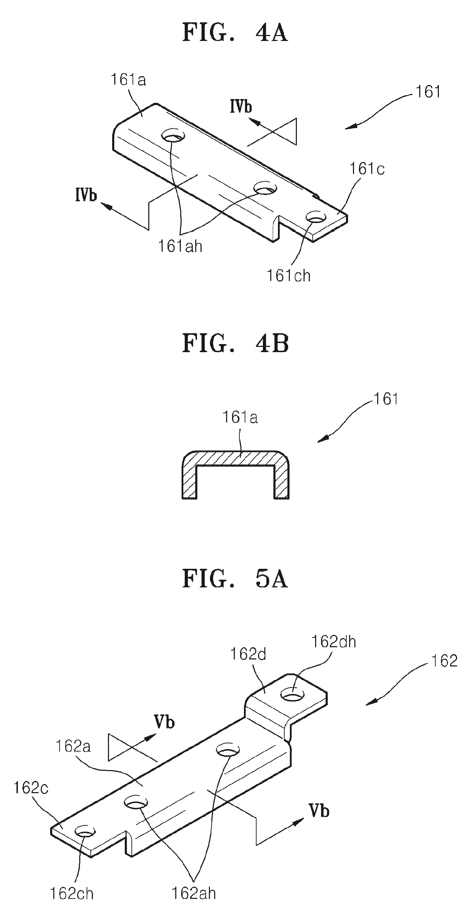

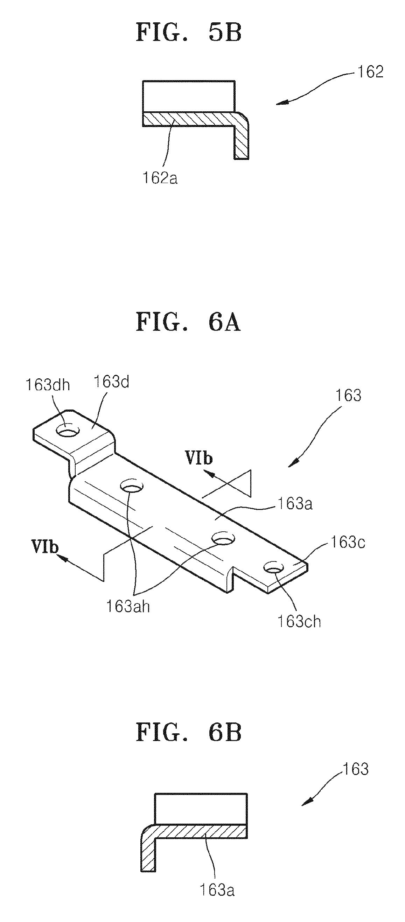

The first and second terminal members 135 and 136 may protrude upwardly to induce current from the battery pack to the outside. The first and second terminal members 135 and 136 may include a metal material exhibiting superior conductivity. For example, the first and second terminal members 135 and 136 may include a material such as aluminium (Al), copper (Cu), nickel (Ni), etc. FIGS. 4A through 6B illustrate the bus bars 160 according to an embodiment of the present invention. FIG. 4A is a perspective view of the first bus bar 161. FIGS. 5A and 6A are perspective views of the second and third bus bars 162 and 163. FIGS. 4B, 5B, and 6B are cross-sectional views taken along lines IVb-IVb, Vb-Vb, and VIb-VIb of FIGS. 4A, 5A, and 6A, respectively.

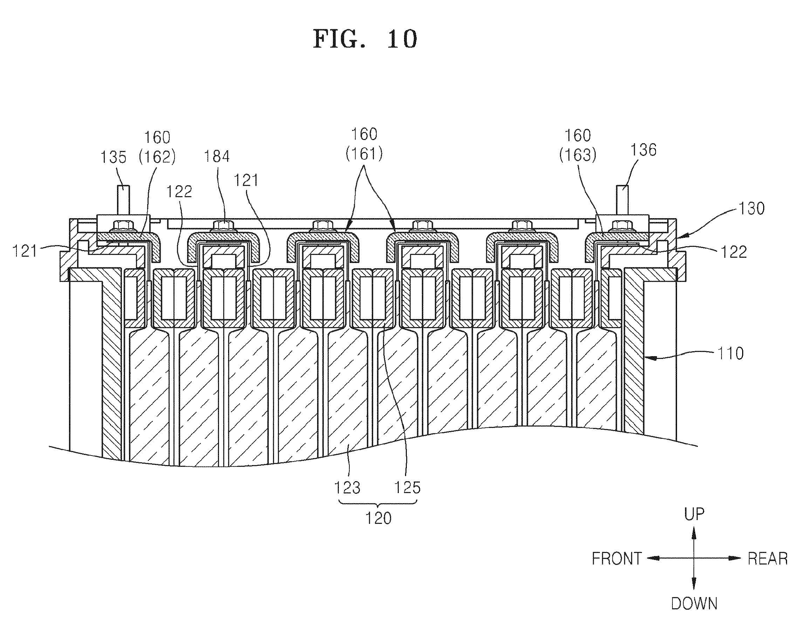

Referring to FIGS. 4A and 4B, the first bus bar 161 may include a main body portion 161a, and a cell balancing portion 161c. The main body portion 161a may include an upper surface and side walls extending downwardly from both sides of the upper surface, to wrap the first and second lead tabs 121 and 122 bent on the first rib 131. The upper surface of the main body portion 161a may contact the bent first and second lead tabs 121 and 122 supported by the first rib 131, and the side walls provided at both sides of the main body portion 161a may respectively cover the first and second lead tabs 121 and 122. Only one side wall need be present however, which at least partially surrounds one side of the first rib 131. Correspondingly, the first rib 131 comprises at least one side wall which is arranged to face a respective side wall of the first bus bar 161, as illustrated in FIG. 10. The presence of the side walls of both the first rib 131 and the first bus bar 161 facilitates securing of the position of the first and second lead tabs 121 122 between the first rib 131 and the first bus bar 161.

The main body portion 161a may be coupled to the first rib 131 with the bent first and second lead tabs 121 and 122 interposed therebetween. To this end, the main body portion 161a may include the coupling hole 161ah formed at a position corresponding to the coupling hole 131h that is formed in the first rib 131.

The cell balancing portion 161c may protrude from one end of the main body portion 161a to transmit voltage information of the battery cell 123 included in each of the battery units 120 to the PCB 170. To this end, the cell balancing portion 161c may include the coupling hole 161ch for connection to the PCB 170.

Referring to FIGS. 5A and 5B, the second bus bar 162 may include a main body portion 162a, a cell balancing portion 162c, and a high current portion 162d. The main body portion 162a may include an upper surface and a side wall extending downwardly from one side of the upper surface to wrap the first lead tab 121 bent on the first rib 131. The upper surface of the main body portion 162a may contact the bent first lead tab 121 supported by the first rib 131, and the side wall may partially cover the first lead tab 121 that is not placed on the first rib 131.

The main body portion 162a may be coupled to the first rib 131 with the bent first lead tab 121 interposed therebetween. To this end, the main body portion 162a may include the coupling hole 162ah formed at a position corresponding to the coupling hole 131h that is formed in the first rib 131.

The cell balancing portion 162c may protrude from one end of the main body portion 162a to transmit voltage information of the battery cell 123 included in each of the battery units 120 to the PCB 170. To this end, the cell balancing portion 162c may include the coupling hole 162ch for connection to the PCB 170.

The high current portion 162d may protrude from the other end of the main body portion 162a and include a through hole 162dh for coupling to the first terminal member 135. As the first terminal member 135 is inserted into the through hole 162dh, the high current portion 162d may be electrically connected to the first terminal member 135 in contact with the same.

Referring to FIGS. 6A and 6B, the third bus bar 163 may include a main body portion 163a, a cell balancing portion 163c, and a high current portion 163d. The main body portion 163a may include an upper surface and a side wall extending downwardly from one side of the upper surface to wrap the second lead tab 122 bent on the first rib 131. The upper surface of the main body portion 163a may contact the bent second lead tab 122 supported by the first rib 131, and the side wall may partially cover the second lead tab 122 that is not placed on the first rib 131.

The main body portion 163a may be coupled to the first rib 131 with the bent second lead tab 122 interposed therebetween. To this end, the main body portion 163a may include the coupling hole 163ah formed at a position corresponding to the coupling hole 131h that is formed in the first rib 131.

The cell balancing portion 163c may protrude from one end of the main body portion 163a to transmit voltage information of the battery cell 123 included in each of the battery units 120 to the PCB 170. To this end, the cell balancing portion 163c may include the coupling hole 163ch for connection to the PCB 170.

The high current portion 163d may protrude from the other end of the main body portion 163a and include a through hole 163dh for coupling to the second terminal member 136. As the second terminal member 136 is inserted into the through hole 163dh, the high current portion 163d may be electrically connected to the second terminal member 136 in contact with the same.

Although in FIGS. 4A through 6B the main body portions 161a, 162a, and 163a and the cell balancing portions 161c, 162c, and 163c are illustrated as having the same height, the present invention is not limited thereto. For example, when the second rib 132 is formed to be higher than the first rib 131 in the insulation plate 130 described with reference to FIG. 3, the cell balancing portions 161c, 162c, and 163c may be formed to be higher than the main body portions 161a, 162a, and 163a according to the height of the second rib 132.

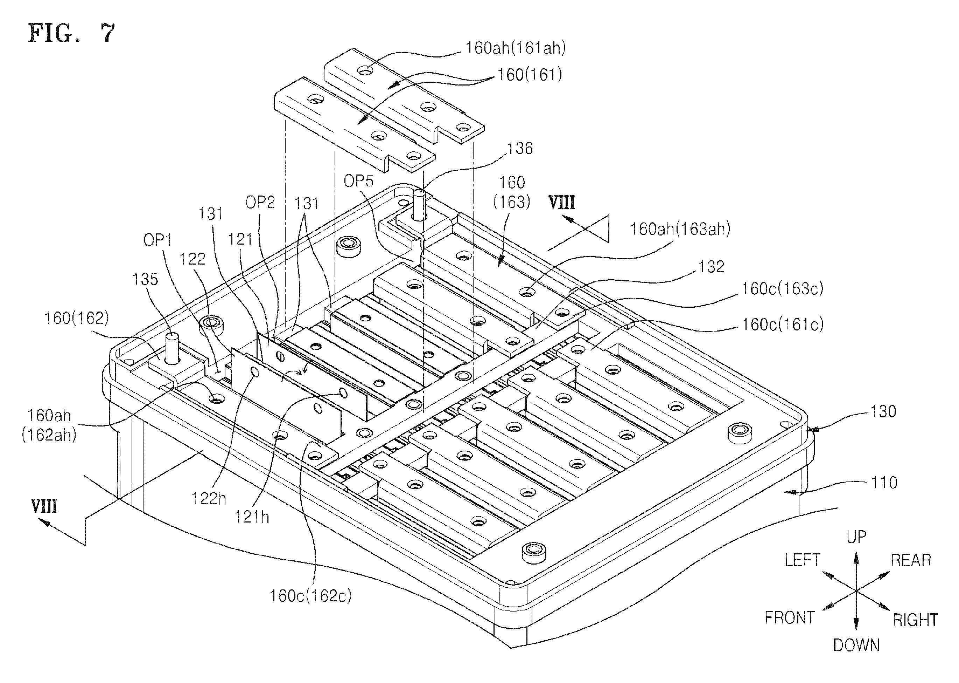

The connections between the first and second lead tabs 121 and 122, the bus bars 160, and the PCB 170 using the insulation plate 130 are described below with reference to FIGS. 7 through 11.

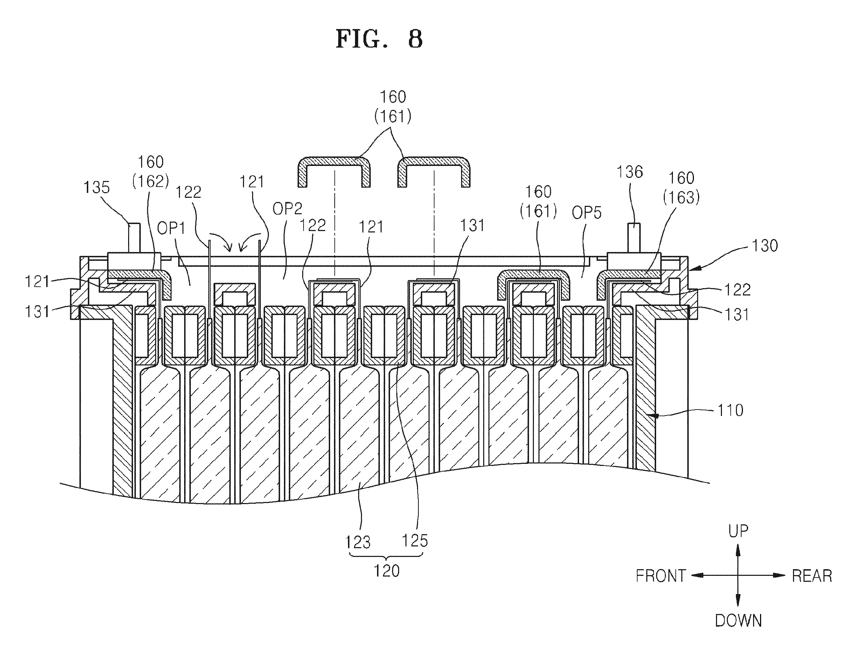

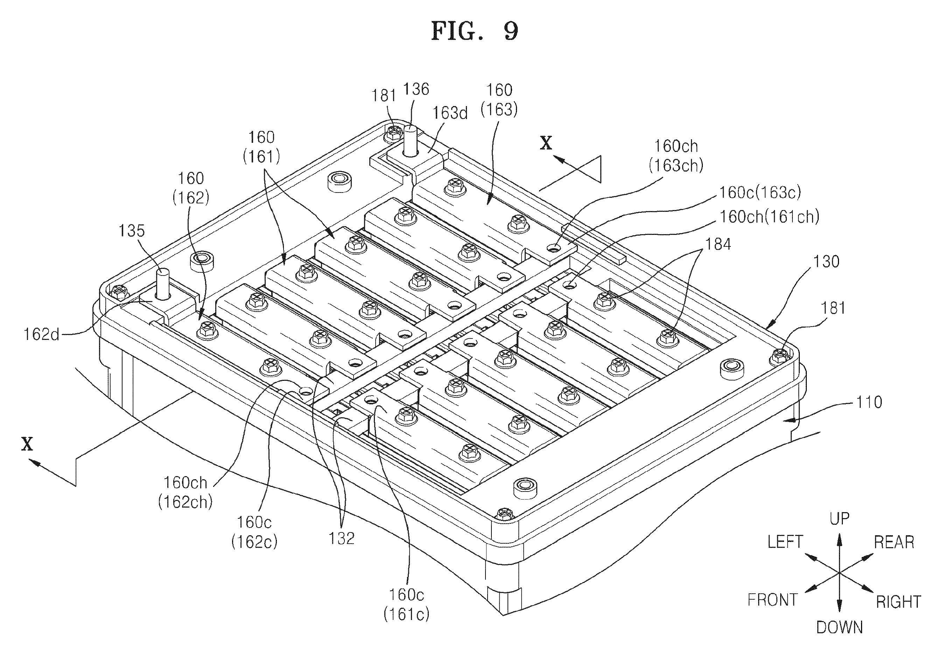

FIG. 7 is a perspective view schematically illustrating the insulation plate 130 and the bus bars 160 arranged in an upper portion of the case 110 when the battery units 120 are accommodated in the case 110. FIG. 8 is a cross-sectional view taken along line VIII-VIII of FIG. 7. FIG. 9 is a perspective view schematically illustrating a state in which the first and second lead tabs 121 and 122 and the bus bars 160 are coupled to each other on the insulation plate 130. FIG. 10 is a cross-sectional view taken along line X-X of FIG. 9.

Referring to FIGS. 7 and 8, the insulation plate 130 may be arranged on the case 110 such that the openings OP1 and OP2 can correspond to the first and second lead tabs 121 and 122 extending from the battery unit 120. The first and second lead tabs 121 and 122 extending from the neighbouring battery units 120 may be exposed to the outside by passing through the openings OP1 and OP2 provided at both sides of the first rib 131. The first and second lead tabs 121 and 122 exposed to the outside may be bent toward each other on the first rib 131.

The bent first and second lead tabs 121 and 122 are folded over each other on the first rib 131, thereby serially connecting the neighbouring battery units 120. The hole 121h formed in the first lead tab 121 and the hole 122h formed in the second lead tab 122 may be aligned with the hole formed in the first rib 131.

The first lead tab 121 extending through the opening OP1 provided at the foremost position is bent forward and accommodated on the first rib 131. The second lead tab 122 extending through an opening OP5 provided at the rearmost position is bent backward and accommodated on the first rib 131.

Then, the bus bars 160 may be accommodated on the first rib 131. For example, the bus bars 160 may be arranged on the first lead tab 121 and/or the second lead tab 122 that are accommodated on the first rib 131. The cell balancing portion 160c of each of the bus bars 160 may be accommodated on the second rib 132. The hole 160ah formed in each of the bus bars 160 may be aligned with the holes 121h and 122h of the first and second lead tabs 121 and 122 and the hole of the first rib 131.

Referring to FIGS. 9 and 10, the first bus bar 161 may be accommodated on the first and second lead tabs 121 and 122 folded over each other on the first rib 131, the second bus bar 162 may be accommodated on the first lead tab 121 that is accommodated on the first rib 131, and the third bus bar 163 may be accommodated on the second lead tab 122 that is accommodated on the first rib 131. The high current portions 162d and 163d of second and third bus bars 162 and 163 may be coupled to the first and second terminal members 135 and 136, respectively.

Referring to FIGS. 7 through 10, the first bus bar 161 may be fixed on the first rib 131 by the fourth fixing member 184. The fourth fixing member 184 may be coupled to the first rib 131 by passing through the hole 161ah formed in the first bus bar 161 and the holes 121h and 122h formed in the first and second lead tabs 121 and122. A bolt may be used as the fourth fixing member 184.

The second bus bar 162 may be fixed on the first rib 131 using the fourth fixing member 184. The fourth fixing member 184 may be coupled to the first rib 131 by passing through the hole 162ah formed in the second bus bar 162 and the hole 121h formed in the first lead tab 121. The third bus bar 163 may be fixed on the first rib 131 using the fourth fixing member 184.

The side walls of the bus bars 160 extend downwardly, i.e. toward the first lead tab 121 and/or the second lead tab 122, and cover the first lead tab 121 and/or the second lead tab 122, so that the bus bars 160 may protect the first and second lead tabs 121 and 122. since the first ribs 131 formed on the insulation plate 130 are separated from each other and the first and second lead tabs 121 and 122 and the bus bars 160 are coupled to the first ribs 131using the fourth fixing member 184, the connection there between may be stably maintained and short-circuits between the bus bars 160 and between the first and second lead tabs 121 and 122 may be prevented.69145

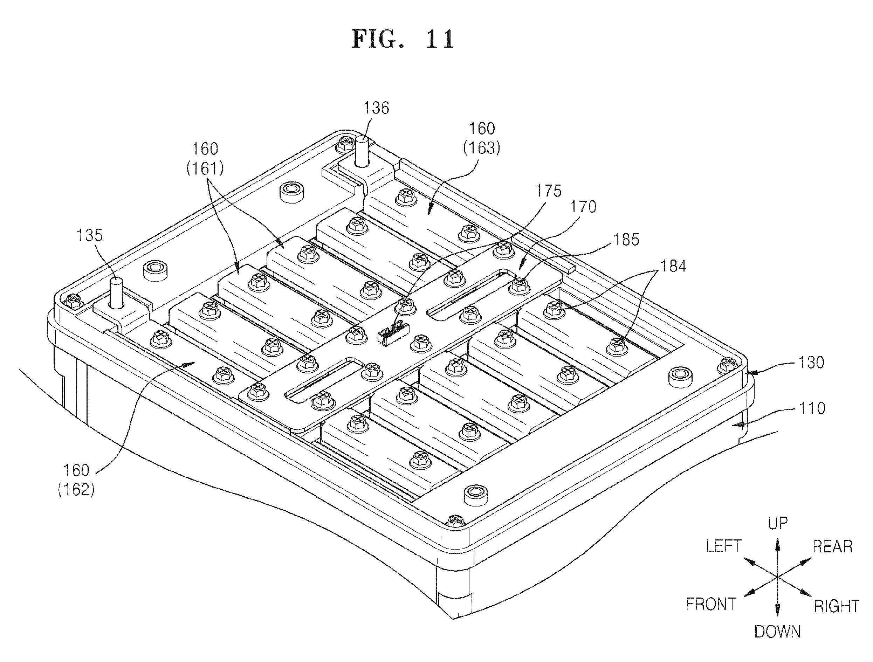

FIG. 11 is a perspective view schematically illustrating a state in which the PCB 170 is accommodated on the bus bars 160.

Referring to FIGS. 9 through 11, the PCB 170 is arranged to cover the cell balancing portion 160c of the bus bars 160 accommodated on the second rib 132. The cell balancing portion 160c may be electrically connected to a lower surface of the PCB 170 in contact with the same. To this end, the PCB 170 may be fixed on the insulation plate 130 using the fifth fixing member 185. The hole 160ch formed in the cell balancing portion 160c may be aligned with the hole 132h of the second rib 132. The fifth fixing member 185 may be coupled to the second rib 132 by passing through the PCB 170 and the cell balancing portion 160c.

The voltage information of the battery cell 123 acquired through each cell balancing portion 160c is converged on the connector 175 via a wiring formed in the PCB 170 and is transferred to the BMS 150 via the cable connected to the connector 175, as described above.

## Claims

1. A battery pack comprising:
a plurality of battery units (120) arranged within a case (110), each battery unit including first (121) and second (122) electrode tabs; and
an insulation plate (130) mounted to the case, the insulation plate having a plurality of first ribs (131), and
a plurality of first bus bars (161), each first bus bar arranged to cover a respective first rib of the insulation plate;
wherein each first bus bar connects a first electrode tab of a first battery unit and a second electrode tab of a second battery unit, the first and second electrode tabs disposed on the first rib which is covered by the first bus bar,
the battery pack **characterized in that** the insulation plate (130) further comprises second ribs (132) arranged perpendicular to the first ribs (131), wherein each of the first bus bars (161) is fixed to a second rib,
wherein each first bus bar has a main body portion (161a) arranged to cover the first rib (131) and a cell-balancing portion (161c) arranged to cover a portion of the second rib.

2. A battery pack according to claim 1, comprising:
a terminal member (135); and
a second bus bar (162) arranged to connect the terminal member (135) to a first electrode tab (121) of one of the plurality of battery units.

3. A battery pack according to claim 2, wherein the second bus bar (162) is fixed to a second rib.

4. A battery pack according to claim 3 wherein the first ribs (131) are divided into two groups, and the second ribs (132) are arranged between the two groups of first ribs.

5. A battery pack according to any one of claims 2 to 4, comprising a printed circuit board (170) coupled to the cell-balancing portion of the first bus bar, the printed circuit board arranged to provide battery unit voltage information to a battery management system (150).

6. A battery pack according to claim 4 or claim 5, wherein the main body portion (161a) of each first bus bar (161) comprises at least one side wall arranged to at least partially surround at least one side of a respective first rib (131).

7. A battery pack according to claim 6, the first rib (131) comprising at least one side wall arranged to face the side wall of the first bus bar (161).

8. A battery pack according to any one of claims 2 to 7, wherein the second bus bar (162) comprises a main body portion (162a) covering a first rib (131), a current-balancing portion (162c) covering a portion of the second rib (132), and a high-current portion (162d) to which the terminal member is connected.

9. A battery pack according to any one of claims 2 to 8 comprising a further terminal member (136), the terminal members (135, 136) separated by an insulation cover (140) covering the insulation plate (130).

10. A battery pack according to claim 9, wherein the insulation cover (140) is arranged to spatially separate the first bus bars (160).

11. A battery pack according to any one of the preceding claims, wherein the first electrode tab (121) of the first battery unit and the second electrode tab (122) of the second battery unit protrude through openings (OP1, OP2) in the insulation plate (130) either side of the first rib (131) on which they are to be disposed, the first and second electrode tabs folded towards each other such that they are supported by the first rib.

12. A battery pack according to any one of the preceding claims, wherein each first bus bar (161) is attached to the first electrode tab (121) of a first battery unit, the second electrode tab (122) of a second battery unit, and the rib (130), using a fixing member (184).

13. A battery pack according to any one of the preceding claims, wherein the first electrode tab (121) of the first battery unit has a different polarity from the second electrode tab (122) of the second battery unit, such that the battery units are serially connected by a first bus bar (161).

14. A battery pack according to any one of claims 1 to 13, wherein the first electrode tab (121) of the first battery unit has the same polarity as the second electrode tab (122) of the second battery unit, such that the battery units are connected in parallel by a first bus bar (161).

## Patentansprüche

1. Batteriepack, umfassend:
eine Mehrzahl von Batterieeinheiten (120), angeordnet innerhalb eines Gehäuses (110), wobei jede Batterieeinheit erste (121) und zweite (122) Elektrodenzungen einschließt; und
eine an dem Gehäuse montierte Isolierplatte (130), wobei die Isolierplatte eine Mehrzahl von ersten Rippen (131) aufweist, und
eine Mehrzahl von ersten Sammelschienen (161), wobei jede erste Sammelschiene so angeordnet ist, dass sie eine jeweilige erste Rippe der Isolierplatte abdeckt;
wobei jede erste Sammelschiene eine erste Elektrodenzunge einer ersten Batterieeinheit und eine zweite Elektrodenzunge einer zweiten Batterieeinheit verbindet, wobei die ersten und zweiten Elektrodenzungen auf der ersten Rippe, die durch die erste Sammelschiene abdeckt ist, angeordnet sind,
wobei der Batteriepack **dadurch gekennzeichnet ist, dass** die Isolierplatte (130) ferner zweite Rippen (132) umfasst, die senkrecht zu den ersten Rippen (131) angeordnet sind, wobei jede der ersten Sammelschienen (161) an einer zweiten Rippe befestigt ist,
wobei jede erste Sammelschiene einen Hauptkörperabschnitt (161a), der so angeordnet ist, dass er die erste Rippe (131) abdeckt, und einen Zellabgleichabschnitt (161c), der so angeordnet ist, dass er einen Abschnitt der zweiten Rippe abdeckt, aufweist.

2. Batteriepack nach Anspruch 1, umfassend:
ein Anschlussglied (135); und
eine zweite Sammelschiene (162), die so angeordnet ist, dass sie das Anschlussglied (135) an eine erste Elektrodenzunge (121) einer der mehreren Batterieeinheiten anschließt.

3. Batteriepack nach Anspruch 2, wobei die zweite Sammelschiene (162) an einer zweiten Rippe befestigt ist.

4. Batteriepack nach Anspruch 3, wobei die ersten Rippen (131) in zwei Gruppen unterteilt sind und die zweiten Rippen (132) zwischen den beiden Gruppen von ersten Rippen angeordnet sind.

5. Batteriepack nach einem der Ansprüche 2 bis 4, umfassend eine an den Zellabgleichabschnitt der ersten Sammelschiene gekoppelte Leiterplatte (170), wobei die Leiterplatte so angeordnet ist, dass sie einem Batterieverwaltungssystem (150) Batterieeinheit-Spannungsinformationen bereitstellt.

6. Batteriepack nach Anspruch 4 oder Anspruch 5, wobei der Hauptkörperabschnitt (161a) jeder ersten Sammelschiene (161) mindestens eine Seitenwand umfasst, die so angeordnet ist, dass sie mindestens eine Seite einer jeweiligen ersten Rippe (131) zumindest teilweise umgibt.

7. Batteriepack nach Anspruch 6, wobei die erste Rippe (131) mindestens eine Seitenwand umfasst, die so angeordnet ist, dass sie der Seitewand der ersten Sammelschiene (161) zugewandt ist.

8. Batteriepack nach einem der Ansprüche 2 bis 7, wobei die zweite Sammelschiene (162) einen Hauptkörperabschnitt (162a), der eine erste Rippe (131) abdeckt, einen Stromabgleichabschnitt (162c), der einen Abschnitt der zweiten Rippe (132) abdeckt, und einen Hochstromabschnitt (162d), an den das Anschlussglied angeschlossen ist, umfasst.

9. Batteriepack nach einem der Ansprüche 2 bis 8, umfassend ein weiteres Anschlussglied (136), wobei die Anschlussglieder (135, 136) durch eine Isolierhülle (140) getrennt sind, die die Isolierplatte (130) abdeckt.

10. Batteriepack nach Anspruch 9, wobei die Isolierhülle (140) so angeordnet ist, dass sie die ersten Sammelschienen (160) räumlich trennt.

11. Batteriepack nach einem der vorangehenden Ansprüche, wobei die erste Elektrodenzunge (121) der ersten Batterieeinheit und die zweite Elektrodenzunge (122) der zweiten Batterieeinheit durch Öffnungen (OP1, OP2) in der Isolierplatte (130) auf beiden Seiten der ersten Rippe (131), auf der sie anzuordnen sind, ragen, wobei die ersten und zweiten Elektrodenzungen derart in Richtung aufeinander gefaltet sind, dass sie durch die erste Rippe abgestützt sind.

12. Batteriepack nach einem der vorangehenden Ansprüche, wobei jede erste Sammelschiene (161) unter Verwendung eines Befestigungsglieds (184) an der ersten Elektrodenzunge (121) einer ersten Batterieeinheit, der zweiten Elektrodenzunge (122) einer zweiten Batterieeinheit und der Rippe (130) befestigt ist.

13. Batteriepack nach einem der vorangehenden Ansprüche, wobei sich die Polarität der ersten Elektrodenzunge (121) der ersten Batterieeinheit von der der zweiten Elektrodenzunge (122) der zweiten Batterieeinheit derart unterscheidet, dass die Batterieeinheiten durch eine erste Sammelschiene (161) in Reihe geschaltet sind.

14. Batteriepack nach einem der Ansprüche 1 bis 13, wobei die erste Elektrodenzunge (121) der ersten Batterieeinheit derart die gleiche Polarität wie die zweite Elektrodenzunge (122) der zweiten Batterieeinheit aufweist, dass die Batterieeinheiten durch eine erste Sammelschiene (161) parallel geschaltet sind.

## Revendications

1. Bloc-batterie comprenant :
une pluralité d'unités de batterie (120) agencées à l'intérieur d'un boîtier (110), chaque unité de batterie comportant des première (121) et deuxième (122) languettes d'électrode ; et
une plaque d'isolation (130) montée sur le boîtier, la plaque d'isolation ayant une pluralité de premières nervures (131), et
une pluralité de premières barres omnibus (161), chaque première barre omnibus étant agencée pour recouvrir une première nervure respective de la plaque d'isolation ;
dans lequel chaque première barre omnibus relie une première languette d'électrode d'une première unité de batterie et une deuxième languette d'électrode d'une deuxième unité de batterie, les première et deuxième languettes d'électrode étant disposées sur la première nervure qui est recouverte par la première barre omnibus,
le bloc-batterie étant **caractérisé en ce que** la plaque d'isolation (130) comprend en outre des deuxièmes nervures (132) agencées perpendiculairement aux premières nervures (131), chacune des premières barres omnibus (161) étant fixée à une deuxième nervure,
dans lequel chaque première barre omnibus a une partie de corps principal (161a) agencée pour recouvrir la première nervure (131) et une partie d'équilibrage d'éléments (161c) agencée pour recouvrir une partie de la deuxième nervure.

2. Bloc-batterie selon la revendication 1, comprenant :
un organe de borne (135) ; et
une deuxième barre omnibus (162) agencée pour relier l'organe de borne (135) à une première languette d'électrode (121) d'une de la pluralité d'unités de batterie.

3. Bloc-batterie selon la revendication 2, dans lequel la deuxième barre omnibus (162) est fixée à une deuxième nervure.

4. Bloc-batterie selon la revendication 3, dans lequel les premières nervures (131) sont divisées en deux groupes, et les deuxièmes nervures (132) sont agencées entre les deux groupes de premières nervures.

5. Bloc-batterie selon l'une quelconque des revendications 2 à 4, comprenant une carte de circuit imprimé (170) couplée à la partie d'équilibrage d'éléments de la première barre omnibus, la carte de circuit imprimé étant agencée pour fournir des informations de tension d'unité de batterie à un système de gestion de batterie (150).

6. Bloc-batterie selon la revendication 4 ou 5, dans lequel la partie de corps principal (161a) de chaque première barre omnibus (161) comprend au moins une paroi latérale agencée pour entourer au moins partiellement au moins un côté d'une première nervure respective (131).

7. Bloc-batterie selon la revendication 6, la première nervure (131) comprenant au moins une paroi latérale agencée pour faire face à la paroi latérale de la première barre omnibus (161).

8. Bloc-batterie selon l'une quelconque des revendications 2 à 7, dans lequel la deuxième barre omnibus (162) comprend une partie de corps principal (162a) recouvrant une première nervure (131), une partie d'équilibrage de courant (162c) recouvrant une partie de la deuxième nervure (132), et une partie à courant élevé (162d) à laquelle l'organe de borne est relié.

9. Bloc-batterie selon l'une quelconque des revendications 2 à 8, comprenant un organe de borne supplémentaire (136), les organes de borne (135, 136) étant séparés par un couvercle d'isolation (140) recouvrant la plaque d'isolation (130).

10. Bloc-batterie selon la revendication 9, dans lequel le couvercle d'isolation (140) est agencé pour séparer spatialement les premières barres omnibus (160).

11. Bloc-batterie selon l'une quelconque des revendications précédentes, dans lequel la première languette d'électrode (121) de la première unité de batterie et la deuxième languette d'électrode (122) de la deuxième unité de batterie font saillie à travers des ouvertures (OP1, OP2) dans la plaque d'isolation (130) de part et d'autre de la première nervure (131) sur laquelle elles doivent être disposées, les première et deuxième languettes d'électrode étant repliées l'une vers l'autre de sorte qu'elles soient supportées par la première nervure.

12. Bloc-batterie selon l'une quelconque des revendications précédentes, dans lequel chaque première barre omnibus (161) est attachée à la première languette d'électrode (121) d'une première unité de batterie, à la deuxième languette d'électrode (122) d'une deuxième unité de batterie, et à la nervure (130), en utilisant un organe de fixation (184).

13. Bloc-batterie selon l'une quelconque des revendications précédentes, dans lequel la première languette d'électrode (121) de la première unité de batterie a une polarité différente de celle de la deuxième languette d'électrode (122) de la deuxième unité de batterie, de sorte que les unités de batterie soient reliées en série par une première barre omnibus (161).

14. Bloc-batterie selon l'une quelconque des revendications 1 à 13, dans lequel la première languette d'électrode (121) de la première unité de batterie a la même polarité que la deuxième languette d'électrode (122) de la deuxième unité de batterie, de sorte que les unités de batterie soient reliées en parallèle par une première barre omnibus (161).
